# EUROPEAN PATENT APPLICATION

(11) **EP 3 742 372 A1**
(43) Date of publication of application: **25.11.2020**
(21) Application number: 18901298.2
(22) Date of filing: 11.09.2018
(51) Int. Cl.: G06Q 20/36, G06Q 30/02

(54) **INFORMATION PROCESSING DEVICE, INFORMATION PROCESSING METHOD, PROGRAM, AND MANUFACTURING METHOD**

(30) Priority: 17.01.2018 JP 2018005889
(71) Applicant: Social Good Foundation Inc., Tokyo 100-0004 (JP)
(72) Inventor: TAKAOKA, Soichiro, Tokyo 100-0004 (JP)
(74) Representative: Cabinet Beaumont
(86) International application number: PCT/JP2018/033672
(87) International publication number: WO 2019/142393

(57) **Abstract**

An information processing apparatus (1) is provided with: a purchase information obtaining portion that obtains purchase information related to a commodity or a service purchased by a user holding a virtual currency; a commission obtaining portion that obtains a commission corresponding to a purchase price of the commodity or the service, from a provider of the commodity or the service; a currency obtaining portion that obtains the virtual currency of an amount corresponding to the purchase information by using the commission; and a provision portion that provides the user with the obtained virtual currency.

## Description

### [Technical Field]

The present invention relates to an information processing apparatus, an information processing method, a program, and a virtual currency trading system manufacturing method.

### [Background Art]

In recent years, interest in virtual currencies backed by a block chain technology has been increasing, and various service methods utilizing virtual currencies have been proposed. For example, Patent Literature 1 discloses an information processing apparatus and the like that accepts payment by a virtual currency when a commodity is purchased at a real store and notifies a deliverer to deliver the purchased commodity to the user's home.

### [Prior Art Literature]

### [Patent Literature]

[Patent Literature 1] JP 2017-49967 A

### [Summary of the Invention]

### [Problem to be Solved by the Invention]

However, the invention according to Patent Literature 1 only delivers the commodity purchased with the virtual currency to the user and does not reach the provision of an incentive according to the purchased commodity and the like by the virtual currency.

According to one aspect, an object is to provide an information processing apparatus and the like capable of assisting purchase of commodities and the like by users by utilizing a virtual currency.

### [Means for Solving the Problem]

An information processing apparatus according to one aspect is provided with: a purchase information obtaining portion that obtains purchase information related to a commodity or a service purchased by a user holding a virtual currency; a commission obtaining portion that obtains a commission corresponding to a purchase price of the commodity or the service, from a provider of the commodity or the service; a currency obtaining portion that obtains the virtual currency of an amount corresponding to the purchase information by using the commission; and a provision portion that provides the user with the obtained virtual currency.

### [Effects of the Invention]

According to one aspect, purchase of commodities and the like by the user can be assisted by utilizing the virtual currency.

### [Brief Description of the Drawings]

[Fig. 1] A schematic view showing a structure example of a virtual currency trading system.
[Fig. 2] A block diagram showing a structure example of a server and a terminal.
[Fig. 3] An explanatory view showing an example of the record layouts of a user DB, a member store DB and a recipient DB.
[Fig. 4] An explanatory view showing the general outline of a first embodiment.
[Fig. 5] An explanatory view for explaining tokenback processing and contribution processing.
[Fig. 6] An explanatory view showing an example of a tokenback screen.
[Fig. 7A] An explanatory view showing an example of an SNS screen.
[Fig. 7B] An explanatory view showing an example of the SNS screen.
[Fig. 8] A flowchart showing an example of the processing procedure of token provision processing.
[Fig. 9] A flowchart showing an example of the processing procedure of token obtaining processing.
[Fig. 10] An explanatory view showing the general outline of a second embodiment.
[Fig. 11] An explanatory view for explaining a screen transition at the terminal.
[Fig. 12] A flowchart showing an example of the token provision processing according to the second embodiment.

### [Mode for Carrying out the Invention]

Hereinafter, the present invention will be described in detail based on the drawings showing embodiments thereof.

### (First embodiment)

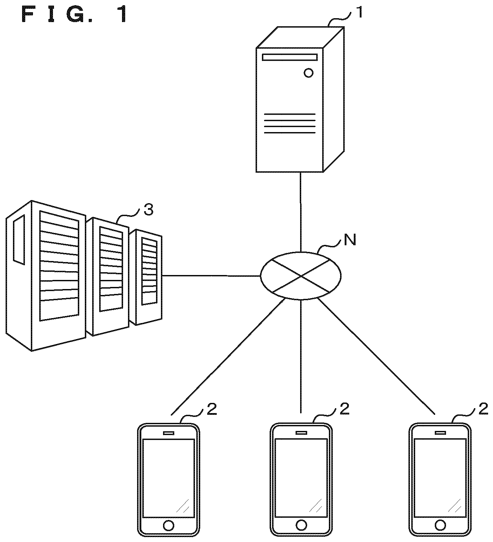

Fig. 1 is a schematic view showing a structure example of a virtual currency trading system. In the present embodiment, a virtual currency trading system that provides the user with a virtual currency according to the user's actual purchase situation will be described. The virtual currency trading system includes an information processing apparatus 1, a terminal apparatus 2 and an issuing server 3. These apparatuses are connected so as to communicate with one another through a network N such as the Internet.

The information processing apparatus 1 is an information processing apparatus capable of various kinds of information processing and information transmission and reception, and is, for example, a server apparatus or a personal computer. In the present embodiment, the information processing apparatus 1 is a server apparatus, and in the following, it will be read as server 1 for the sake of simplicity. The server 1 functions as an operator (sales store) that accepts money received from the user and sells the virtual currency, and transmits the virtual currency corresponding to the received money to the terminal apparatus 2. In the present embodiment, the server 1 sells the user the present system's own virtual currency (token) issued by the issuing server 3. At the same time, the server 1 collects the purchase information when the user purchased a commodity or a service at a predetermined member store, and provides a token-back service that newly provides, as cashback, tokens corresponding to the purchase price as a bonus offered when the user performs shopping at the member store. Concrete contents of the present service will be described later in detail.

The terminal apparatus 2 is an information processing terminal possessed by the user, and is, for example, a smartphone, a personal computer or a tablet terminal. In the following, for the sake of simplicity, the terminal device 2 will be read as terminal 2. On the terminal 2, an application program provided by the server 1, for example, an application program that functions as a wallet for the virtual currency is installed. The user holds the virtual currency by the wallet.

Not only a mode in which the application program that functions as the wallet is installed on the user's terminal 2 and the virtual currency (token) is held on a local terminal but also a mode in which the virtual currency held by the user is managed on an online account provided by the server 1 or the like on a Web may be included in the present embodiment. That is, the location where the virtual currency is stored is not limited to a local terminal but may be a server apparatus on a cloud.

The issuing server 3, which is a server apparatus functioning as an issuer that issues tokens, accepts a remittance from the server 1 and transmits tokens corresponding to the remitted amount to the server 1. The server 1 distributes the tokens purchased from the issuing server 3 to the user.

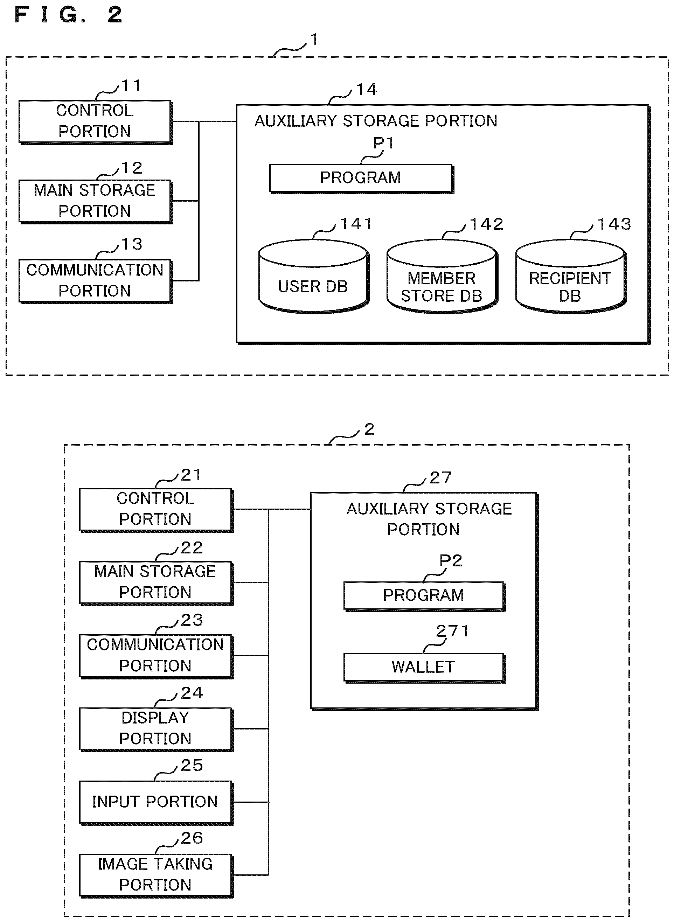

Fig. 2 is a block diagram showing a structure example of the server 1 and the terminal 2. The server 1 is provided with a control portion 11, a main storage portion 12, a communication portion 13 and an auxiliary storage portion 14.

The control portion 11 has one or more than one arithmetic processing unit such as a CPU (Central Processing Unit), an MPU (Micro-Processing Unit) or a GPU (Graphics Processing Unit), and performs various kinds of information processing, control processing and the like related to the server 1 by reading a program P1 stored in the auxiliary storage portion 14 and executing it. The main storage portion 12 is a temporary storage area such as an SRAM (Static Random Access Memory), a DRAM (Dynamic Random Access Memory) or a flash memory, and temporarily stores data necessary for the control portion 11 to execute arithmetic processing. The communication portion 13 includes a processing circuit and the like for performing processing related to communication, and performs information transmission and reception with the terminal 2 and the like.

The auxiliary storage portion 14 is a large-capacity memory, a hard disk or the like, and stores the program P1 necessary for the control portion 11 to execute processing, and other data. Moreover, the auxiliary storage portion 14 stores a user DB 141, a member store DB 142 and a recipient DB 143. The user DB 141 is a database storing information on each user. The member store DB 142 is a database storing information on each member store. The recipient DB 143 is a database storing information related to the recipients to which the users can contribute tokens. The token contribution will be described later in detail.

The auxiliary storage portion 14 may be an external storage device connected to the server 1. Moreover, the server 1 may be a multicomputer formed of a plurality of computers or may be a virtual machine virtually constructed by software.

Moreover, in the present embodiment, the server 1 is not limited to the above-described structure but may include, for example, a reading portion that reads information stored on a portable storage medium.

The terminal 2 is provided with a control portion 21, a main storage portion 22, a communication portion 23, a display portion 24, an input portion 25, an image taking portion 26 and an auxiliary storage portion 27.

The control portion 21 has one or more than one arithmetic processing unit such as a CPU or an MPU, and performs various kinds of information processing, control processing and the like related to the terminal 2 by reading a program P2 stored in the auxiliary storage portion 27 and executing it. The main storage portion 22 is a temporary storage area such as an SRAM (Static Random Access Memory) or a DRAM (Dynamic Random Access Memory), and temporarily stores data necessary for the control portion 21 to execute arithmetic processing. The communication portion 23 includes an antenna, a processing circuit and the like for performing communication, and performs information transmission and reception with the server 1 and the like. The display portion 24 is a display device such as a liquid crystal display, an organic EL (Electro Luminescence) display, and displays an image provided by the control portion 21. The input portion 25 is an operation part such as a touch panel or a mechanical key, and accepts an operation input from the user. The image taking portion 26 is an image taking mechanism such as a CMOS (Complementary Metal Oxide Semiconductor) camera, and performs image taking according to the operation input by the user.

The auxiliary storage portion 27 is a non-volatile memory such as a ROM (Read Only Memory), and stores the program P2 necessary for the control portion 21 to execute processing, and other data. Moreover, the auxiliary storage portion 27 stores a wallet 271 storing data on the tokens held by the user. The wallet 271 holds information such as a wallet address and a secret key related to the virtual currency wallet.

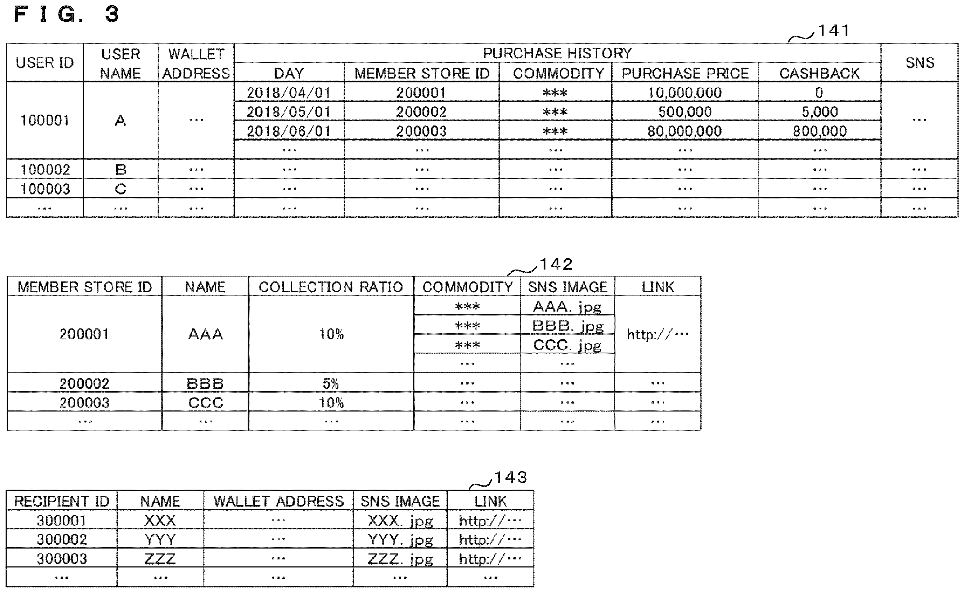

Fig. 3 is an explanatory view showing an example of the record layouts of the user DB 141, the member store DB 142 and the recipient DB 143.

The user DB 141 includes a user ID column, a user name column, a wallet address column, a purchase history column and an SNS (Social Networking Service) column. The user ID column stores IDs for identifying users. The user name column stores the users' names in association with the user IDs. The wallet address column stores the wallet addresses of the wallets 271 possessed by the users in association with the user IDs. The purchase history column stores the purchase histories of the users purchasing commodities or services at member stores in association with the user IDs. The purchase history includes, as shown in Fig. 3, cashback histories representative of the amounts of cashback provided to the users (the amount returned by tokens) according to the purchase prices. The SNS column stores information related to SNS accounts possessed by the users in association with the user IDs.

The member store DB 142 includes a member store ID column, a name column, a collection ratio column, a commodity column, an SNS image column and a link column. The member store ID column stores IDs for identifying member stores. The name column stores the names of the member stores in association with the member store IDs. The collection ratio column stores, in association with the member store IDs, the collection ratios of the commissions collected from the member stores according to the purchase prices when the users purchased a commodity or a service at the member stores. The commodity column stores information related to commodities (or services) provided at the member stores in association with the member store IDs. The SNS image column stores image data for posting to SNS associated with each commodity in association with the member store IDs and the commodities. The link column stores link addresses for transition to Web pages associated with the member stores in association with the member store IDs. The hyperlink is, for example, an address for transition to a homepage of a member store.

The recipient DB 143 includes a recipient ID column, a name column, a wallet address column, an SNS image column and a link column. The recipient ID column stores IDs for identifying recipients. The name column stores the names of the recipients (for example, facility names, group names) in association with the recipient IDs. The wallet address column stores wallet addresses for the recipients to receive contribution of tokens from the users, in association with the recipient IDs. The SNS image column stores image data for posting to SNS associated with the recipients in association with the recipient IDs. The link column stores link addresses of Web pages (for example, homepages) associated with the recipients in association with the recipient IDs.

The registration and update of the images for posting to SNS, the links and the like stored in the recipient DB 143 may be performed, for example, by the manager of the present system or may be performed by various facilities and groups that are the recipients.

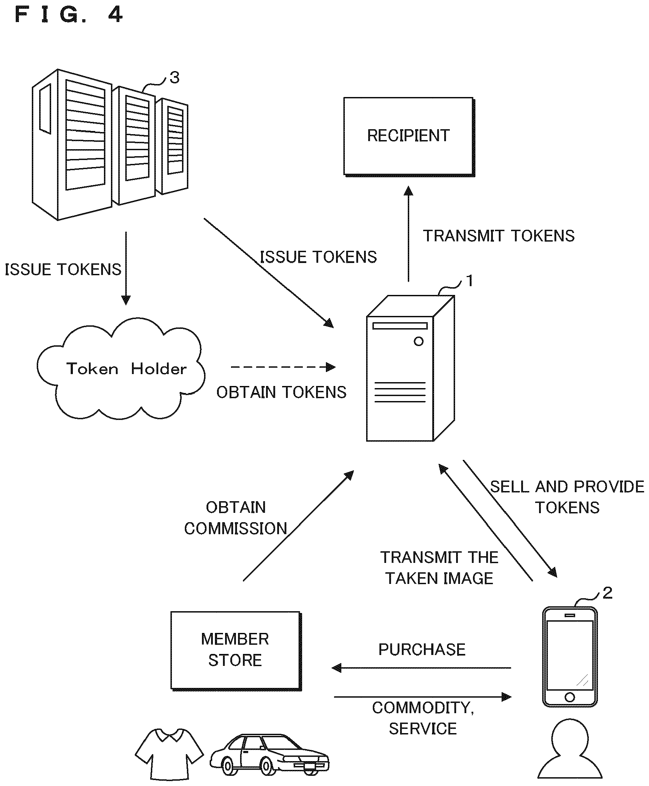

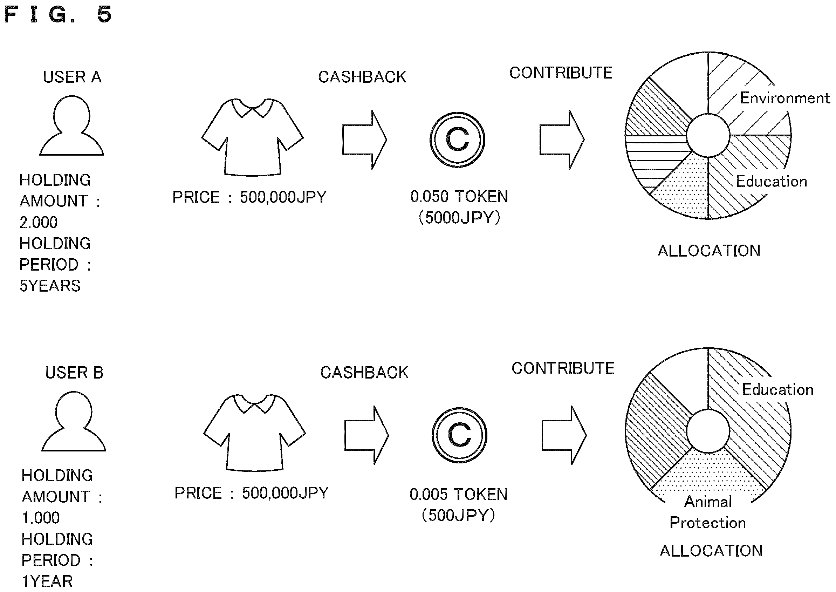

Fig. 4 is an explanatory view showing the general outline of the first embodiment. Fig. 5 is an explanatory view for explaining tokenback processing and contribution processing. Fig. 4 illustrates a manner in which when a user purchased a commodity at a member store, tokens corresponding to cashback are provided and some of the provided tokens are contributed to a predetermined recipient. Fig. 5 conceptually illustrates concrete processing contents of the tokenback processing and the contribution processing.

First, based on Fig. 4, the general outline of the present embodiment will be described. As has already been described, the present system handles its own currency (token) issued by the issuing server 3. For example, the issuing server 3 performs ICO (Initial Coin Offering), and sells all or some of the tokens generated by itself. For example, the issuing server 3 sells the tokens to a general user ("Token Holder" shown in Fig. 4) and to the server 1 that functions as the operator (provider) of the token sale.

When ICO is performed, after determining the upper limit of the total token issuance amount, the issuing server 3 supplies tokens corresponding to part of the total issuance amount to the market. For example, when the total issuance amount of tokens is 10,000, the issuing server 3 supplies 1000 tokens corresponding to ten percent of the total issuance amount at the stage of ICO. When a request to newly purchase tokens is accepted from the server 1 as described later, the issuing server 3 newly issues tokens within a range satisfying the upper limit of the total issuance amount (10,000), and transmits (sells) them to the server 1.

The server 1 accepts money received from the user and sells tokens. The server 1 obtains (purchases) tokens corresponding to the received money from the issuing server 3, and transmits (remits) them to the wallet address possessed by the user. The transmitted tokens are stored in the wallet 271 in the terminal 2. Thereby, the user becomes a holder who holds tokens.

While in the present embodiment, description is given on the assumption that the server 1 transmits (remits) tokens to the terminal 2, a structure may be adopted in which the server 1 only mediates communication between a token exchange, a money exchange or the like (not shown) and the terminal 2 and the terminal 2 obtains tokens not from the server 1 but from the exchange or the like. That is, the server 1 is only necessarily capable of operating in such a manner that tokens are provided to the user according to the received money, and does not have to accept the received money and sell (transmit) tokens by itself.

Here, when a user holding tokens performed shopping at a member store, the user can receive the transfer of tokens corresponding to the purchase price of the commodity or the like, that is, cashback by tokens (tokenback). A member store is one or more than one store affiliated with the tokenback service according to the present system, and is a provider providing commodities or services to users. The provider of commodities or the like is not necessarily a real store but may be an EC site selling commodities on the Internet as in a second embodiment described later.

The processing to provide the user with tokens corresponding to cashback will be described in detail. First, the user purchases a commodity or the like at a member store. Although the purchase of the commodity or the like may be one using the above-described tokens, purchase by payment means other than the tokens (for example, legal currency) is suitable.

When the user purchased a commodity or the like, in order to certify to the server 1 that he/she performed shopping at a member store, he/she operates the terminal 2 to take an image of a paper medium such as a receipt or a cash register tape and transmit the taken image to the server 1. The means for certifying that the user performed shopping is not limited to taking of an image of a receipt or the like. For example, the terminal 2 may read a predetermined QR code (trademark) printed on a cash register tape to obtain information on the purchase of a commodity or the like and transfer the information to the server 1.

When obtaining a taken image from the terminal 2, the server 1 performs image recognition and extracts (obtains) information such as the commodity purchased by the user, the purchase price and the purchase date. The server 1 stores the extracted purchase information into the user DB 141 to accumulate purchase histories.

While the server 1 performs image recognition in the above description, the terminal 2 may perform image recognition and transmit the recognition result to the server 1. That is, the server 1 is only necessarily capable of obtaining information related to an image obtained by image taking of a receipt or the like, and the obtained information may be the image itself or may be the result of recognition of the purchase information recognized from the image.

The server 1 calculates the amount of tokens corresponding to the cashback provided to the user from the purchase price of the commodity or the like extracted from the taken image. For example, the server 1 calculates the amount of tokens based on the holding information on the tokens held by the user in addition to the purchase price of the commodity or the like.

The holding information is information representative of the situation of holding of tokens by the user, and is, for example, the holding period during which the user continuously holds the tokens without selling them and the holding amount of the tokens held in the wallet 271. In the present embodiment, the server 1 determines the amount of tokens transferred to the user according to the holding period and holding amount of the tokens.

Based on Fig. 5, the tokenback processing will be described based on the holding information. Fig. 5 illustrates a manner in which different amounts of tokens are transferred to two users who purchased the same commodity according to the token holding situations. In the example shown in Fig. 5, a "user A" holds "2,000" tokens for "five years". Moreover, a "user B" holds "1,000" tokens which are fewer than the tokens held by the user A, for "one year" which is shorter than the user A's holding period.

First, the server 1 determines whether each user holds not less than a predetermined amount of tokens or not based on the token holding information of the user. The predetermined amount is, for example, one sheet (1,000). When the user does not hold not less than one sheet of tokens, the server 1 does not make the user a target of tokenback even though purchase information is obtained, and provides no tokens. When the user holds not less than one sheet of tokens, the server 1 provides tokens. That is, the server 1 determines users eligible to tokenback based on the minimal token holding amount, and provides tokens to the users having not less than the minimal holding amount of tokens. In the example shown in Fig. 5, since the users A and B both hold not less than one sheet of (not less than 1,000) tokens, both are eligible to tokenback. On the other hand, the server 1 provides no tokens to the users holding less than one sheet. By determining the minimal holding amount necessary for receiving tokenback, the tokens are made to function as a kind of membership.

The determination time point at which the token holding amount is determined as described above may be, for example, the purchase time point at which the user purchases a commodity or the like at a member store, the transmission time point at which the purchase information (taken image) is transmitted to the server 1 or the obtaining time point at which the server 1 obtains a commission from the member store as described later. Thus, the determination time point at which whether the user is eligible to tokenback or not is determined is not specifically limited.

When a user holds not less than one sheet of tokens, the server 1 calculates the amount of tokens transferred to the user based on the information on the purchase of a commodity or the like. In the example of Fig. 5, for example, to the user A who purchased a 500,000-yen commodity, the server 1 transfers tokens "0.050" in amount corresponding to one percent of the purchase price. What percentage of the purchase price is made cashback (tokenback) is an arbitrary design item; for example, the cashback percentage may be determined for each member store and for each commodity. Moreover, for example, the server 1 may provide a fixed amount of tokens to the user irrespective of the difference in the commodity or the like purchased by the user.

On the other hand, to the user B purchased the same commodity as the user A, the server 1 transfers tokens of "0.005" in amount corresponding to 0.1 percent of the purchase price. Since the token holding amount of the user B is half that of the user A and the holding period thereof is one-fifth that of the user A, the server 1 determines that the amount of token transfer to the user B is one-tenth that of the user A. As described above, the server 1 multiplies the purchase price by a coefficient corresponding to the holding period and the holding amount, and calculates the amount of tokens transferred to each user.

The above-described calculation method is an example, and the method of calculating the amount of tokens provided to the user is not limited thereto. For example, as one piece of holding information on which the token amount calculation is based, the presence or absence of the past sale of tokens by the user may be added. Moreover, the information on which the token amount calculation is based is not limited to the information on the purchase of a commodity or the like and information on the holding of tokens but may be different information such as the presence or absence of token contribution or the presence or absence of posting to SNS described later.

As described above, the server 1 transfers more tokens to users with longer token holding periods and larger holding amounts. This creates an incentive for the user to hold tokens without selling them, which contributes to the increase in the value of tokens described later.

Returning to Fig. 4, description will be continued. The server 1 having provided tokens to the user obtains a commission from the member store according to the purchase price at which the user purchased the commodity or the like. The commission is a matching commission paid in the name of guiding users holding tokens to member stores. As described above, the server 1 provides users with tokens corresponding to cashback to thereby encourage shopping at member stores. In return, the server 1 collects a commission from the member stores. For example, the server 1 notifies the member stores to pay as the commission the amount when the amount of tokens provided to the user is converted to legal currency. The member stores transmit money to the server 1 through non-illustrated money transmitting means (for example, monetary facilities such as banks).

When a user newly performs shopping at a member store and tokens are transferred to the user, the server 1 obtains (purchases) tokens by using as the source of funds the commission paid by the member store and provides them to the user. For example, the server 1 transmits a token purchase request to the issuing server 3. For example, the server 1 transmits information such as the purchase amount and purchase price of tokens to the issuing server 3.

When accepting the purchase request, the issuing server 3 determines whether tokens are stored (in stock) or not. When determining that tokens are stored, the issuing server 3 transmits to the server 1 the amount of tokens requested by the server 1 from the stored tokens. The server 1 transmits (remits) the commission collected from the member store to the issuing server 3 in exchange for the obtaining of the tokens.

When determining that no tokens are stored, the issuing server 3 newly issues tokens within a range not exceeding the upper limit of the total amount of issuance of tokens, and transmits them to the server 1. For example, when the total amount of issuance is 10,000 sheets and no tokens are stored at the issuing server 3, the issuing server 3 increases the total amount of issuance by 10 percent and newly issues (generates) 1,000 sheets of tokens. The issuing server 3 performs token transmission (sale) to the server 1 from the newly issued tokens.

While the server 1 obtains tokens from the issuing server 3 which is the main token issuer in the above description, for example, the server 1 may obtain tokens from a holder holding tokens ("Token Holder" in Fig. 4). In this case, for example, the server 1 outputs information such as the desired purchase price and desired purchase amount of tokens, that is, a purchase request to a non-illustrated virtual currency exchange or the like, searches for a holder whose token sale price or the like matches, and makes buying and selling of tokens reach agreement. The server 1 executes a transaction to receive transmission of tokens from the holder with whom the buying and selling agreement is made, and obtains tokens to be provided to the user. That is, the server 1 is only necessarily capable of obtaining tokens by using as the source of funds the commission collected from the member store, and may obtain tokens from the issuer or obtain them from another token holder.

By the above-described processing, tokens are newly obtained from the stock of the issuing server 3 (or a token holder), which acts to increase the price of tokens. Although in order to avoid excessive increase in the value of tokens, tokens are newly issued when no issued tokens are stored in the above description, since new issuance is performed within a limit not exceeding the total amount of issuance, the price of tokens increases as a whole.

Thereby, the value of the tokens held by the user increases. Therefore, not only the user can merely obtain tokens by performing shopping but also the more he/she purchases commodities, the more he/she can expect increase in the value of the tokens held by him/her. Thereby, the users' buying motives are stimulated and the member stores can expect improvement in sales. The server 1 functions as the operator that leads the above-described purchase cycle so as to be sustainable, and performs the provision of tokens and the collection of commissions from the member stores.

Further, in the present embodiment, the server 1 performs contribution processing to transmit (remit), to a predetermined recipient, some of the tokens provided to the user as cashback. The contents of the contribution processing is conceptually illustrated on the right side of Fig. 5. For example, the manager of the present system is affiliated with a nature conservation group, an animal protection group, a child support institution, an education institution and the like, and contributes tokens with the groups and institutions as recipients. These groups and institutions are examples and the recipients are not specifically limited. The recipients each have a wallet address for receiving token contributions, and the server 1 transmits tokens to the wallet address.

The server 1 extracts some of the tokens to be transferred to the user, and transmits the some tokens to recipients. The ratio of the contributed tokens among the tokens corresponding to cashback is not specifically limited. When tokens are contributed, although specification of a recipient may be accepted from the user, the server 1 performs allocation processing to predict the recipient to which the user is to desire to make a contribution and the allocation of the tokens to be contributed to the recipient, and automatically performs contribution.

For example, the server 1 determines the recipient and the allocation based on the history of purchase of commodities and the like by the user. While the method of determining the recipient and the allocation from the purchase history is not specifically limited, for example, the server 1 may associate the attribute of the purchased commodity (for example, whether it is targeting men or targeting women) with the attribute of each recipient (for example, whether it is an environmental protection group or an education-related group) and determine the recipient and the allocation on a rule basis. Moreover, for example, the server 1 may perform the following: After accepting an input of setting of the recipient and the allocation by hand from each user and accumulating a certain number of samples, the server 1 performs matching among the users based on the purchase histories and determines the recipient and the allocation so as to be the same as those of the user having a similar purchase history. Moreover, for example, the server 1 may introduce a machine learning algorithm, construct a learning model with the purchase history as the input value and the recipient and allocation as the output value and determine the recipient and the allocation by using the learning model.

By the above-described processing, the server 1 generates different contribution allocations based on the users' purchase histories as shown on the right side of Fig. 5. For example, in the case of the user A, the server 1 sets the weight of the contribution to an environmental protection group and an education institution so as to be heavy. Moreover, in the case of the user B, the server 1 sets the weight of the contribution to an education institution and an animal protection group so as to be heavy.

While the recipient and allocation of tokens are determined based on each user's purchase history in the above description, for example, the allocation may be performed based on attributes such as the user's sex, age and occupation. That is, the server 1 is only necessarily capable of automatically determining the recipient and the allocation, and the judgement criterion is not limited to the purchase history.

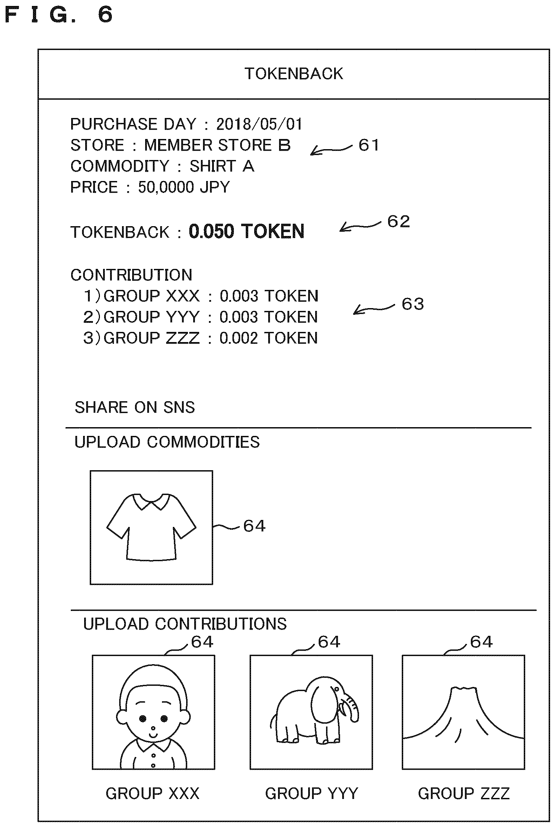

Fig. 6 is an explanatory view showing an example of a tokenback screen. In Fig. 6, an example of the display screen where the user can confirm the tokens received as cashback is illustrated. The tokenback screen includes purchase information 61 on the commodity or the like that has become a factor of cashback, a tokenback 62 representative of the amount of provided tokens, an allocation 63 representative of the recipient and the allocation, and SNS images 64.

The SNS images 64 are posting materials prepared by the server 1 for uploading to SNS, and are, for example, an image of the commodity or the like purchased by the user or images related to the recipients to which the user contributed tokens. As shown in Fig. 6, an SNS image 64 for uploading the purchased commodity to SNS and SNS images 64 for uploading the recipients are displayed on the tokenback screen. When notifying the user of tokenback or the like through the tokenback screen, the server 1 also searches various databases for the SNS image 64 of the commodity or the like or the recipient and outputs a plurality of candidates on the tokenback screen.

The terminal 2 accepts a selection input to select any of the SNS images 64 that the user desire to upload, from among the displayed SNS images 64. When a selection input to an SNS image 64 is accepted, for example, the terminal 2 displays a non-illustrated pop-up screen and accepts input of comments or the like for uploading to SNS. The terminal 2 notifies the server 1 of the contents of the selection of the SNS image 64 and the contents of the input of comments or the like and makes a request to generate an article to be posted to SNS (posting information) and upload it.

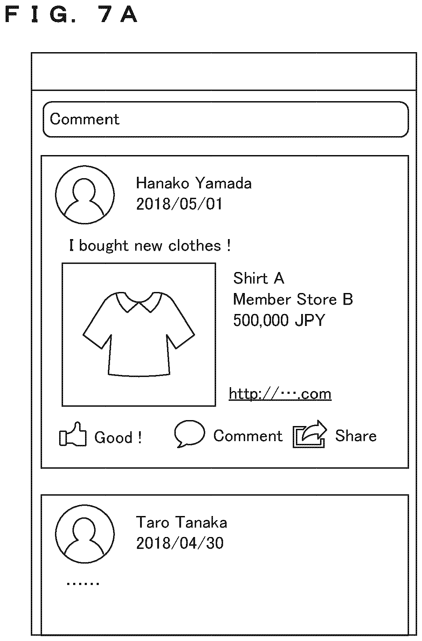

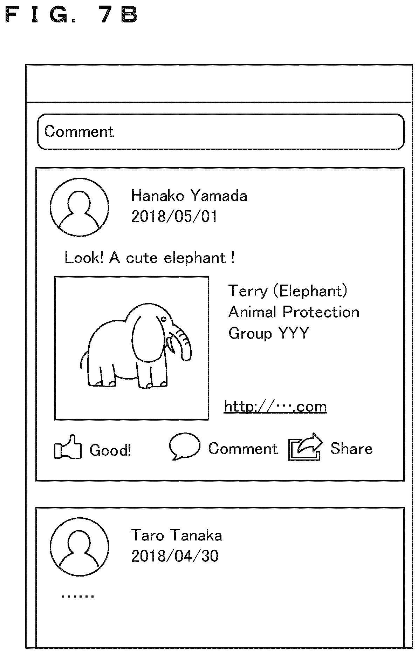

Fig. 7 is explanatory views showing examples of an SNS screen. The server 1 generates the posting article shown in Fig. 7 and outputs (uploads) onto SNS. Fig. 7A shows a screen example when the purchased commodity is selected from among the SNS images 64 and Fig. 7B shows a screen example when a recipient is selected.

The posting article posted to SNS includes, for example, a link 71 in addition to the user's account name and comments, the SNS image 64 and the like. The link 71 is a hyperlink for transition to a Web page associated with the member store or the recipient, and is, for example, a link to the home page of the member store or the recipient. Based on the contents of the input on the terminal 2, the server 1 generates the posting article including the link 71 and uploads it to the user's SNS account. Thereby, the information related to the member store or the recipient is spreading on SNS, so that other users' participation in the service related to the present system can be encouraged. Moreover, the social satisfaction of the user having purchased a commodity or the like and contributed tokens can be increased, and the user's buying motive and contributing motive can be stimulated.

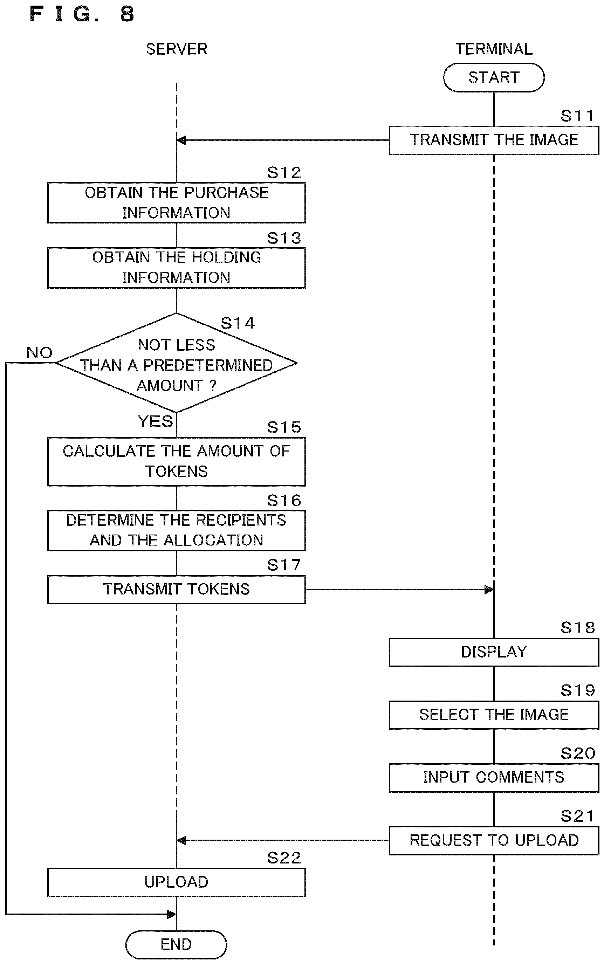

Fig. 8 is a flowchart showing an example of the processing procedure of the token provision processing. The processing contents of the tokenback processing to provide the user with tokens will be described based on Fig. 8. For the sake of simplicity of description, description will be given on the assumption that the user has already paid money to the server 1 and holds a certain amount of tokens.

The control portion 21 of the terminal 2 obtains a taken image obtained by image-taking a paper medium where purchase information is described, and transmits it to the server 1 (step S11). The paper medium is, for example, a receipt or a cash register tape. The control portion 21 takes an image of a receipt or the like according to an operation by the user, and transmits the taken image to the server 1.

When the taken image is obtained from the terminal 2, the control portion 11 of the server 1 performs image recognition on the image, and obtains the purchase information related to the commodity purchased by the user (step S12). For example, the control portion 11 extracts information such as the purchase price of the commodity, the purchased commodity and the purchase date from the taken image. The control portion 11 stores the extracted purchase information into the user DB 141.

Moreover, the control portion 11 obtains the holding information representative of the holding situation of the tokens held by the user with reference to the transaction data recorded in the block chain (step S13). The holding information is, for example, information such as the holding period, holding amount and the like of the tokens.

The control portion 11 determines whether the user holds not less than a predetermined amount of tokens or not based on the obtained holding information (step S14). When determining that the user does not hold not less than the predetermined amount of tokens (S14: NO), the control portion 11 ends the series of processing.

When determining that the user holds not less than the predetermined amount of tokens (S14: YES), the control portion 11 calculates the amount of tokens corresponding to cashback provided to the user, based on the purchase information obtained at step S12 and the holding information obtained at step S13 (step S15). For example, the control portion 11 calculates the cashback amount based on the purchase price of the commodity or the like and the holding period and holding amount of the tokens, and calculates the token amount corresponding to the cashback amount. The control portion 11 stores the calculated cashback amount into the user DB 141.

The control portion 11 extracts some of the calculated tokens, and determines one or more than one recipient to which the some tokens are contributed and the allocation of the tokens contributed to each recipient (step S16). For example, the control portion 11 determines the recipient and the allocation based on the user's past purchase history. The control portion 11 transmits, of the tokens calculated at step S15, some to the user's terminal 2 and some to each recipient determined at step S16 (step S17).

When tokens corresponding to cashback are obtained from the server 1, the control portion 21 of the terminal 2 displays the amount of tokens provided from the server 1 on the display portion 24 (step S18). For example, the control portion 21 displays, as shown in Fig. 6, the amount of tokens returned (provided) to the user, the recipient to which some of the tokens are contributed and the allocation, and the SNS images 64 which are candidates for the image for uploading to SNS. The SNS images are images associated with the commodity purchased by the user or images related to the recipient.

The control portion 21 accepts a selection input to select any of the images from among the SNS images 64 displayed at step S18 (step S19). Further, the control portion 21 accepts an input of comments or the like to be posted together with the selected image (step S20). The control portion 21 requests the server 1 to generate an article to be posted to SNS (posting information) based on the image selected at step S19 and the comments or the like inputted at step S20 and upload it (step S21). When the upload request is accepted from the terminal 2, the control portion 11 of the server 1 generates an article for uploading to SNS by using the posting materials of the image selected at step S19 and the comments or the like inputted at step S20, and uploads it onto SNS (step S22). The article includes the link 71 for transition to a Web page associated with the member store or the recipient in addition to the image selected at step S19 and the comments or the like inputted at step S20. The control portion 11 ends the series of processing.

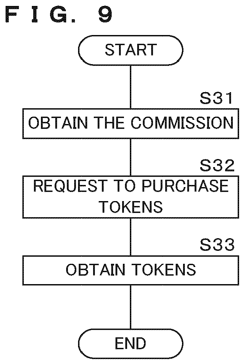

Fig. 9 is a flowchart showing an example of the processing procedure of token obtaining processing. The token obtaining processing to collect commission from member stores and obtain tokens will be described based on Fig. 9.

The control portion 11 of the server 1 starts the following processing, for example, by a batch process: The control portion 11 obtains (collects) from the member store the commission corresponding to the cashback amount provided to the user (step S31). For example, the control portion 11 notifies the member store to pay the commission corresponding to the cashback amount with reference to the history of cashback (tokenback) stored in the user DB 141. The control portion 11 receives remittance of the commission, for example, by way of a monetary facility such as a bank.

The control portion 11 makes a purchase request to purchase tokens corresponding to the cashback provided to the user, from the token issuer (issuing server 3) (step S32). Then, the control portion 11 obtains tokens from the issuing server 3 by using the commission obtained at step S31 (step S33). That is, the control portion 11 purchases tokens by using as the source of funds the commission paid by the member store. For example, when accepting the purchase request at step S32, the issuing server 3 determines whether the required amount of tokens are stored (in stock) or not. When determining that the required amount of tokens are present, the issuing server 3 transmits to the server 1 the required amount of tokens from the stored tokens. When determining that the required amount of tokens are absent, the issuing server 3 newly issues tokens within a range not exceeding the upper limit of the total amount of issuance, and transmits the tokens of the amount required by the server 1 from the newly issued tokens. The control portion 11 ends the series of processing.

While some of the tokens provided to the user are contributed to a predetermined recipient in the above description, the present embodiment is not limited thereto. For example, the server 1 may distribute tokens to a company employee for the sake of welfare within the company and provide some of the transferred tokens to another employee as a reward to an employee achieving high performance. Moreover, for example, the server 1 may sell tokens tokenback of which is obtained only in a specific region as a regional development measure and transmit some of the tokens transferred to the user to a regional local government as tax revenue of the local government. As described above, the server 1 is only necessarily capable of transmitting some of the tokens provided to the user to a predetermined destination, and the object of the transmission is not necessarily a contribution.

Moreover, while the SNS images 64 are shown as an example as materials for posting to SNS in the above description, the posting materials are not limited to images (still images and moving images); for example, they may be text, sound data or the like.

While in the above description, for the sake of convenience of description, the server 1 collects (obtains) a commission from the member store and procures (obtains) tokens from the issuing server 3 after providing the user with tokens corresponding to cashback, the server 1 may provide the user with the tokens corresponding to cashback after completing the procurement of tokens. In this case, for example, immediately after the shopping by the user, the server 1 displays the planned tokenback amount on the tokenback screen, and transmits the tokens after completing the procurement of tokens. As described above, the order of the token provision to the user, the commission obtaining from the member store and the token obtaining from the issuing server 3 is an arbitrary design item, and the order of the processes can be varied.

While the server 1 obtains purchase information from the user's terminal 2 in the above description, it may obtain the purchase information from the member store. For example, the server 1 may obtain the user's purchase information from a POS (Point of Sales) system of the member store.

In this case, for example, the server 1 distributes, to the user, an application program (first program, program P2) functioning as the wallet for receiving tokens, and distributes an application program (second program) to transmit the purchase information to the server 1 to the member store (provider of the commodity or the service). The application program (second program) is installed, for example, on a predetermined terminal apparatus placed on the member store or a POS server that manages the terminal apparatus. The application program causes the computer such as the terminal apparatus placed on the member store or the POS server to perform the processing to accept a request to purchase a commodity or the like from the user and transmit the purchase information to the server 1. Further, the application program causes the computer to execute the processing to obtain a notification representative of the amount of tokens provided to the user from the server 1 and display (output) the notification (the amount of tokens corresponding to cashback) on a display or the like placed on the member store in order for the user to find the amount of tokens provided as cashback.

Moreover, in order that tokens are provided to users holding not less than a predetermined amount as described above, for example, the above-described application program may determine whether the user's token holding amount is not less than the predetermined amount or not when a purchase request is accepted and transmit the purchase information to the server 1 to obtain the notification related to tokenback only when the user holds not less than the predetermined amount of tokens. In this case, the application program, for example, may inquire the server 1 of the user's token holding amount or may search by itself for the user's token holding amount with reference to the block chain.

From the above, according to the first embodiment, the server 1 provides tokens corresponding to cashback to users holding tokens (virtual currency) according to the information on the purchase of commodities or the like at member stores. Thereby, unlike a simple payment system by a virtual currency, purchase of commodities and the like by users can be assisted by utilizing the virtual currency. Moreover, since the tokens corresponding to cashback are covered based on commissions obtained from member stores, a sustainable purchase cycle can be assisted.

Moreover, according to the first embodiment, the server 1 procures the tokens corresponding to cashback from the issuer or the market by using the commission from the member store as the source of funds. Thereby, the token circulation amount can be reduced to prompt increase in the value of tokens.

Moreover, according to the first embodiment, tokens corresponding to cashback are provided only to users holding not less than a predetermined amount of tokens. By determining the minimum holding amount necessary for receiving tokenback, the tokens are made to function as a kind of membership, so that the sustainable purchase cycle can be more appropriately constructed.

Moreover, according to the first embodiment, the amount of tokens to be provided is determined according to the user's token holding situation such as the token holding period and holding amount. This creates an incentive for the user to hold tokens without selling them, so that increase in the value of tokens can be expected.

Moreover, according to the first embodiment, the server 1 extracts some of the tokens to be provided to the user and transmits them to a predetermined destination (for example, a recipient, an employee in a company, or a regional local government). Thereby, for example, donation (contribution) activities, business activities, regional development activities can be assisted, so that the virtual currency can be utilized not only for purchase assistance but also as a sustainable social assistance measure.

Moreover, according to the first embodiment, the recipient and the allocation are automatically determined based on the user's purchase history, and tokens are transmitted. Thereby, the user can make a contribution with an appropriate allocation without selecting the recipient by himself/herself, so that convenience can be improved.

Moreover, according to the first embodiment, the server 1 presents materials for posting to SNS to the user, generates a posting article (posting information) upon accepting the user's selection, and automatically uploads it. Thereby, the commodity or the like purchased by the user, or the token recipient or the like can be made known to other users to encourage them to participate in the present service, and the user's satisfaction is increased so that further purchase activities and contribution activities can be promoted.

### (Second embodiment)

In the present embodiment, a mode will be described in which tokens are provided when a commodity is purchased through EC service such as an EC site. Contents overlapping those of the first embodiment will be denoted by the same reference designations and description thereof is omitted.

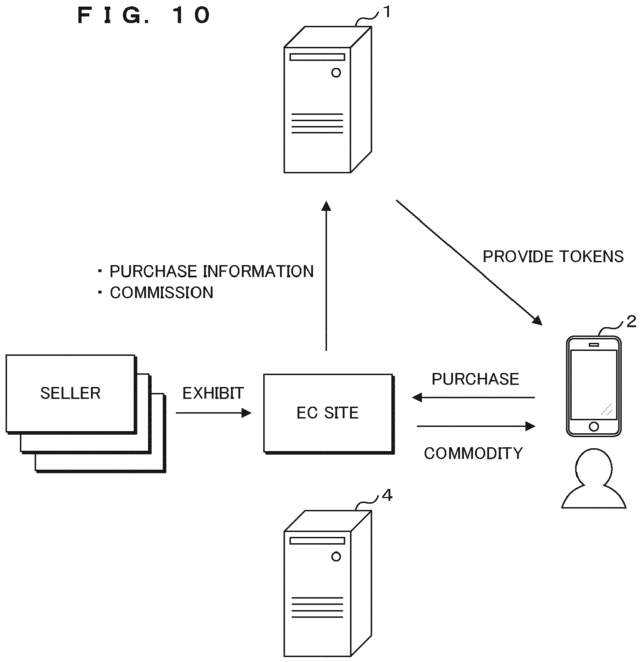

Fig. 10 is an explanatory view showing the general outline of the second embodiment. In Fig. 10, a manner in which the user purchases a commodity by using an EC site and obtains tokens corresponding to the purchase price is conceptually illustrated. The EC site is, for example, a virtual store on the Internet and is a Web site presenting commodities on a browser. For example, the user can purchase a commodity from a seller through an EC site or from the operating company of the EC site and receive delivery of the commodity.

In the present embodiment, the server 1 affiliates with an EC site, obtains commodity purchase information from an EC server 4 managing the EC site, and provides tokens to the user who used the EC site. In this case, the server 1 obtains a commission from the operating company of the EC site, purchases tokens with the commission as the source of funds, and provides them to the user.

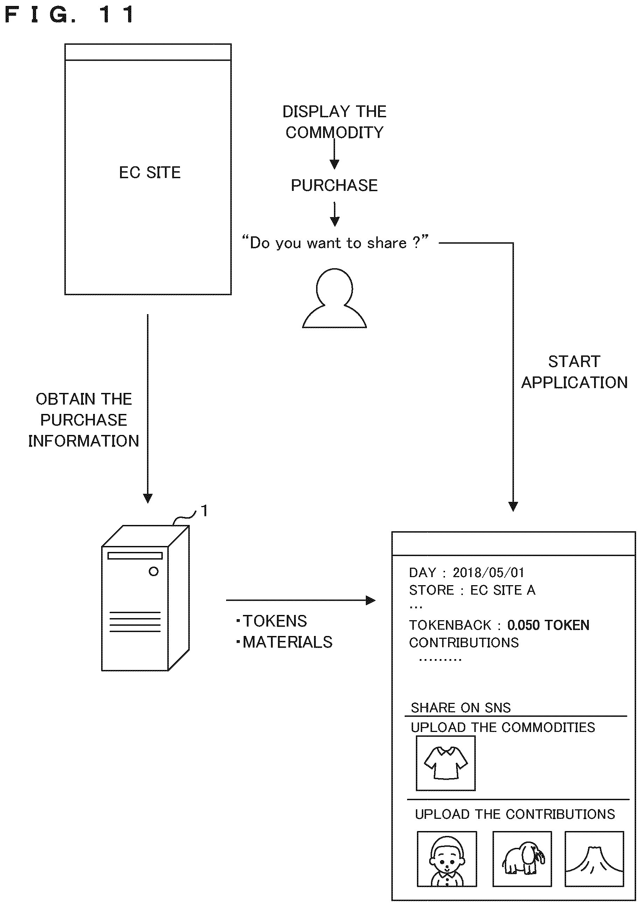

Fig. 11 is an explanatory view for explaining the screen transition at the terminal 2. The process of screen transition where transition is made from the EC site to the tokenback screen (see Fig. 6) will be described based on Fig. 11.

First, the terminal 2 accesses the EC server 4, and displays a browser screen related to the EC site. The screen displays commodity information related to commodities exhibited on the EC site. The terminal 2 accepts an operation input by the user, and accepts an input to specify the commodity that the user wants to purchase. The terminal 2 requests the EC server 4 to purchase the specified commodity.

When accepting the purchase request, the EC server 4 executes predetermined payment processing and determines the purchase of the commodity. The EC server 4 transmits, to the server 1, the purchase information on the commodity the purchase of which has been determined. Moreover, the EC server 4 displays, on the terminal 2, an end screen (not shown) indicating that payment is finished, and notifies the user of the completion of the shopping.

Here, the EC server 4 displays a link to start the application program (program P2) provided by the affiliated server 1 on the end screen. For example, as shown in Fig. 11, the EC server 4 displays a text "Would you like to share this?" with a hyperlink on the end screen. When the text is operated, the terminal 2 starts the application program. For example, the terminal 2 displays the tokenback screen illustrated in Fig. 6, and presents a plurality of SNS images 64 to the user. By making a selection among the SNS images 64, the user can automatically perform posting to SNS as in the first embodiment.

As described above, the present system can be implemented in so-called net shopping through EC sites. In particular, in the present embodiment, after the completion of the commodity purchase at an EC site, the link to the application program is displayed on the end screen, and transition to the display screen of the SNS images 64 is made with the operation to the link as the trigger. Thereby, the user can smoothly perform posting to SNS from shopping on the EC site.

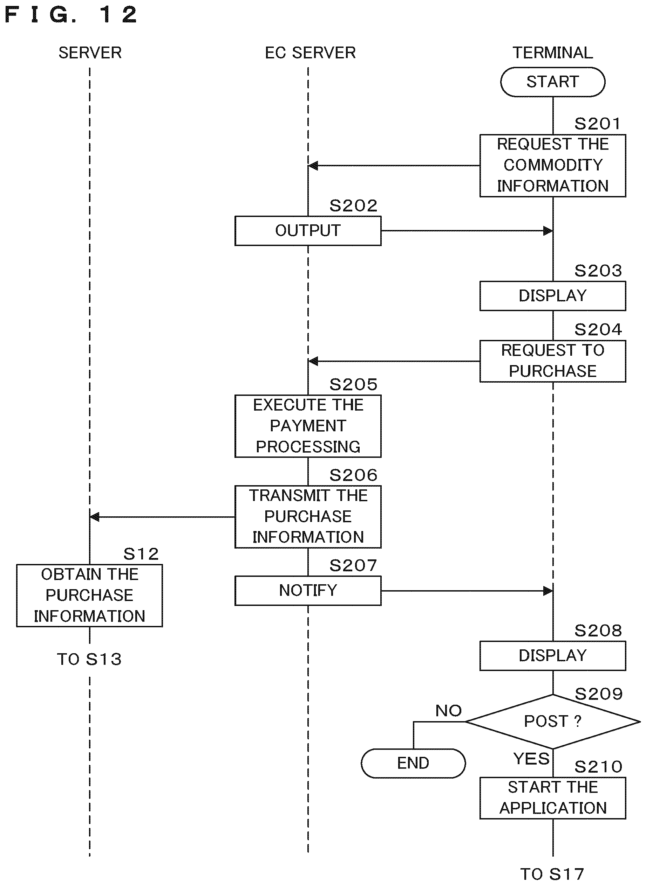

Fig. 12 is a flowchart showing an example of the token provision processing according to the second embodiment. The processing contents of the token provision processing according to the second embodiment will be described based on Fig. 12.

The control portion 21 of the terminal 2 accesses the EC server 4 and requests the EC server 4 to output commodity information (step S201). When accepting the commodity information output request, the EC server 4 outputs the commodity information to the terminal 2 (step S202).

The control portion 21 of the terminal 2 displays the commodity information outputted from the EC server 4 on the browser (step S203). The control portion 21 accepts an operation input related to the commodity purchase request from the user, and transmits it to the EC server 4 (step S204).

When receiving the purchase request, the EC server 4 executes the payment processing to make payment for the requested commodity purchase (step S205). For example, the EC server 4 makes a withdrawal from the user's bank account by way of a credit company or the like based on the preregistered user's credit card number or the like.

The EC server 4 transmits, to the server 1, purchase information related to the commodity purchased by the user (step S206). The control portion 11 of the server 1 obtains the purchase information from the EC server 4 (step S12) and shifts the process to step S13.

The EC server 4 notifies the terminal 2 that the payment processing is finished (step S207). The control portion 21 of the terminal 2 displays the end screen indicating that the payment processing is finished (step S208). In addition to the purchased commodity, the purchase price and the like, the end screen includes a link to start the application program (P2) provided by the server 1 for transition to the display screen of the SNS images 64. The control portion 21 starts the application program and determines whether to perform posting to SNS or not based on an operation input by the user (step S209). When determining that posting to SNS is not performed (S209: NO), the control portion 21 ends the series of processing. When determining that posting is performed (S209: YES), the control portion 21 starts the application program and displays the tokenback screen including the SNS images 64 (step S210). The control portion 21 shifts the process to step S17.

While a mode in which a commodity is purchased on an EC site (Web site) is described in the above description, a mode in which a specifically designed GUI application is installed on the terminal 2 and EC service is received on the GUI screen of the application is also included in the scope of the present embodiment. That is, the server 1 is only necessarily capable of providing tokens when the user purchases a commodity by using EC service and the mode of the EC service is not limited to a Web site.

From the above, according to the second embodiment, the present system is also applicable to a case where a commodity is purchased through an EC site.

It should be considered that the embodiments disclosed this time are illustrative in all aspects and is not limitative. The scope of the present invention is indicated not by the meaning described above but by the claims, and all changes that fall within the meaning equivalent to the claims and the scope are to be embraced.

### [Description of Reference Numerals]

- 1: Server (information processing apparatus)
- 11: Control portion
- 12: Main storage portion
- 13: Communication portion
- 14: Auxiliary storage portion
- P1: Program
- 141: User DB
- 142: Member store DB
- 143: Recipient DB
- 2: Terminal (terminal apparatus)
- 21: Control portion
- 22: Main storage portion
- 23: Communication portion
- 24: Display portion
- 25: Input portion
- 26: Image taking portion
- 27: Auxiliary storage portion
- P2: Program
- 271: Wallet

## Claims

1. An information processing apparatus comprising:
a purchase information obtaining portion that obtains purchase information related to a commodity or a service purchased by a user holding a virtual currency;
a commission obtaining portion that obtains a commission corresponding to a purchase price of the commodity or the service, from a provider of the commodity or the service;
a currency obtaining portion that obtains the virtual currency of an amount corresponding to the purchase information by using the commission; and
a provision portion that provides the user with the obtained virtual currency.

2. The information processing apparatus according to claim 1,
wherein the currency obtaining portion
outputs a purchase request to purchase the virtual currency based on the commission, to an issuer of the virtual currency or a holder of the virtual currency, and
obtains the virtual currency from the issuer or the holder.

3. The information processing apparatus according to claim 1 or 2, comprising:
a holding information obtaining portion that obtains holding information representative of the user's virtual currency holding situation; and
a determination portion that determines whether the user holds not less than a predetermined amount of virtual currency or not based on the holding information,
wherein when determining that the user holds not less than the predetermined amount of virtual currency, the provision portion provides the virtual currency.

4. The information processing apparatus according to claim 3,
wherein the provision portion provides the virtual currency of the amount corresponding to the holding information.

5. The information processing apparatus according to any of claims 1 to 4, comprising:
an extraction portion that extracts, of the virtual currency provided to the user, some of the virtual currency; and
a transmission portion that transmits the extracted virtual currency to a predetermined destination.

6. The information processing apparatus according to claim 5,
wherein the destination is a recipient to which the virtual currency is contributed,
the information processing apparatus comprises: a purchase information storage portion that stores the purchase information; and
a determination portion that determines a plurality of recipients to which the virtual currency is transmitted and an allocation of the virtual currency transmitted to each of the recipients based on the user's purchase history with reference to the purchase information storage portion, and
the transmission portion transmits the virtual currency to each of the recipients according to the allocation determined by the determination portion.

7. The information processing apparatus according to claim 6, comprising:
a material storage portion that stores a posting material associated with the commodity, the service or the recipient, for generating posting information for posting onto a network;
a material output portion that outputs a candidate for the posting material to the user based on the commodity or the service purchased by the user represented by the purchase information or the recipient determined by the determination portion;
a selection portion that accepts a selection of the posting material from the user; and
a posting output portion that generates the posting information by using the selected posting material and outputs it onto the network.

8. An information processing method that causes a computer to execute processing to:
obtain purchase information related to a commodity or a service purchased by a user holding a virtual currency;
obtain a commission corresponding to a purchase price of the commodity or the service, from a provider of the commodity or the service;
obtain the virtual currency of an amount corresponding to the purchase information by using the commission; and
provide the user with the obtained virtual currency.

9. A program that causes a computer to execute processing to:
obtain a virtual currency from a provider of the virtual currency according to an amount of money received from a user;
output, to the provider, purchase information related to a commodity or a service purchased by the user; and
obtain the virtual currency of an amount corresponding to the purchase information from the provider.

10. The program according to claim 9,
obtaining a taken image obtained by image-taking a medium where the purchase information is described; and
outputting information related to the taken image to the provider.

11. The program according to claim 9 or 10,
displaying an amount of the virtual currency obtained according to the purchase information, a recipient to which some of the virtual currency is contributed, and an amount of the virtual currency contributed to the recipient.

12. The program according to claim 11,
obtaining, from the provider, a candidate for a posting material associated with the commodity, the service or the recipient, for generating the positing information to be posted onto a network;
displaying the candidate for the posting material;
accepting a selection of the posting material; and
requesting the provider to generate the posting information by using the selected posting material and output it onto the network.

13. A manufacturing method of manufacturing a virtual currency trading system that is formed of a first computer and a second computer, transmits, so as to be installed on the first computer, a first program causing the first computer to execute processing to obtain the virtual currency from a provider of the virtual currency according to an amount of money received from a user and obtain, from the provider, the virtual currency of an amount corresponding to purchase information related to a commodity or a service purchased by the user, and
transmits, so as to be installed on the second computer, a second program causing the second computer to execute processing to accept a purchase request to purchase the commodity or the service from the user, when the purchase request is accepted, output the purchase information to the provider, obtain a notification representative of an amount of the virtual currency provided to the first computer according to the purchase information and output the notification to the user.

14. The manufacturing method according to claim 13,
wherein when the purchase request is accepted, the second program determines whether the user holds not less than a predetermined amount of virtual currency or not, and when determining that the user holds not less than the predetermined amount of virtual currency, the second program outputs the purchase information to the provider to obtain the notification.
